# EUROPÄISCHE PATENTSCHRIFT

(11) **EP 3 461 685 B1**
(45) Veröffentlichungstag und Bekanntmachung des Hinweises auf die Patenterteilung: **01.07.2020**
(21) Anmeldenummer: 18186951.2
(22) Anmeldetag: 02.08.2018
(51) Int. Cl.: B60N 2/90, B60N 2/00

(54) **VERFAHREN ZUM BETRIEB EINER ELEKTROMOTORISCHEN MASSAGEEINRICHTUNG EINES SITZES**
METHOD FOR OPERATING AN ELECTRIC MOTORISED MASSAGE DEVICE OF A SEAT
PROCÉDÉ DE FONCTIONNEMENT D'UN DISPOSITIF DE MASSAGE D'UN SIÈGE

(30) Priorität: 28.09.2017 DE 102017217331
(43) Veröffentlichungstag der Anmeldung: 03.04.2019
(73) Patentinhaber: Brose Fahrzeugteile SE & Co. Kommanditgesellschaft, Bamberg, 96052 Bamberg (DE)
(72) Erfinder: MERGL, Christian, 97475 Zeil (DE); WEINGÄRTNER, Thomas, 96117 Memmelsdorf (DE); HORN, Peter, 96164 Kemmern (DE); MÜLLER, Alexander, 96120 Bischberg (DE); BICKEL, Stefan, 96049 Bamberg (DE); MARKERT, Matthias, 97437 Haßfurt (DE); SOMMER, Uwe, 96528 Effelder (DE); DORSCH, Sebastian, 96164 Kemmern (DE)
(74) Vertreter: FDST Patentanwälte

(56) Entgegenhaltungen:
- EP-A1- 1 939 047
- DE-A1-102015 204 492
- KR-A- 20150 114 033

## Beschreibung

Die Erfindung betrifft sowohl ein Verfahren zum Betrieb einer elektromotorischen Massageeinrichtung eines Sitzes, die einen Massageantrieb mit einem Elektromotor umfasst, als auch eine elektromotorische Massageeinrichtung eines Sitzes. Der Sitz ist jeweils bevorzugt ein Bestandteil eines Kraftfahrzeugs. Ferner betrifft die Erfindung einen Sitz eines Kraftfahrzeugs.

Kraftfahrzeuge umfassen eine Anzahl an Nebenaggregaten, die nicht direkt dem Vortrieb des Kraftfahrzeugs dienen. Meist wird mittels dieser Nebenaggregate ein Komfort des Benutzers des Kraftfahrzeugs erhöht. Ein derartiges Nebenaggregat ist eine elektromotorische Massageeinrichtung, die ein Bestandteil eines Fahrzeugsitzes ist. Hierbei wird bei Aktivierung ein bestimmter Bereich des Fahrzeugsitzes periodisch verstellt, wie eine Rückenlehne oder ein Teil einer Rückenlehne. Aufgrund dessen wird eine Durchblutung eines Benutzers des Fahrzeugsitzes angeregt, weswegen eine Benutzung des Kraftfahrzeugs angenehmer ist. Auch können mittels des Kraftfahrzeugs auf diese Weise Fahrten mit einer vergleichsweise großen zeitlichen Dauer ausgeführt werden, ohne dass der Benutzer ermüdet.

Kraftfahrzeugsitze weisen zudem üblicherweise eine Sitzbelegungserkennung auf. In Abhängigkeit der Sitzbelegungserkennung erfolgt beispielsweise eine Überwachung des korrekten Anlegens eines Gurtes und gegebenenfalls die Ausgabe eines Warntons. Zudem werden, um Kosten zu sparen, üblicherweise in einem Crash-Fall lediglich dann die Airbags aktiviert, sofern der Sitz belegt ist. Zur Erkennung, ob der Sitz belegt ist, wird üblicherweise ein Gewichtssensor verwendet, oder eine Deformation des Sitzes aufgrund der Belegung durch eine Person wird erfasst. In einer Alternative hierzu wird eine kapazitive Sensorelektrode herangezogen, mittels derer im Bereich des Sitzes ein elektromagnetisches Feld erstellt und überwacht wird. Im Betrieb wird dabei eine Änderung einer Dielektrizitätskonstante aufgrund einer Veränderung der Kapazität erfasst. Die Änderung der Dielektrizitätskonstanten rührt hierbei von der Anwesenheit einer Person im Bereich des Sitzes her. Sofern somit eine Änderung der Kapazität erfasst wird, ist auch eine Belegung des Sitzes erkannt. Aus der DE102015204492 ist ein Verfahren bekannt einen Sitz mit Massageelementen auszustatten und diese als Sensoren zur Sitzbelegungserkennung einzusetzen.

Der Erfindung liegt die Aufgabe zugrunde, ein besonders geeignetes Verfahren zum Betrieb einer elektromotorischen Massageeinrichtung eines Sitzes sowie eine besonders geeignete elektromotorische Massageeinrichtung eines Sitzes als auch einen besonders geeigneten Sitz eines Kraftfahrzeugs anzugeben, wobei insbesondere Herstellungskosten verringert und vorzugsweise eine Lebensdauer und/oder ein Komfort erhöht und geeigneterweise ein akustischer Eindruck verbessert ist.

Hinsichtlich des Verfahrens wird diese Aufgabe durch die Merkmale des Anspruchs 1, hinsichtlich der elektromotorischen Massageeinrichtung durch die Merkmale des Anspruchs 7 und hinsichtlich des Sitzes durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb einer elektromotorischen Massageeinrichtung. Die elektromotorische Massageeinrichtung ist ein Bestandteil eines Sitzes, und bestimmungsgemäß wird mittels der elektromotorischen Massageeinrichtung eine Massagefunktion ausgeführt. Hierbei wird beispielsweise ein Bestandteil des Sitzes, wie die Sitzfläche oder eine Lehne, bewegt, insbesondere periodisch. Der Sitz und somit die elektromotorische Massageeinrichtung sind bevorzugt ein Bestandteil eines Kraftfahrzeugs, und der Sitz ist beispielsweise ein Fahrersitz oder ein Beifahrersitz.

Die elektromotorische Massageeinrichtung weist einen Massageantrieb mit einem Elektromotor auf. Mittels des Elektromotors ist insbesondere ein weiterer Bestandteil des Massageantriebs angetrieben, mittels dessen eine Massagefunktion durchgeführt wird. Beispielsweise wird mittels des weiteren Bestandteils, beispielsweise ein Vibrationselement, eine Unwucht oder ein Stempel, ein Bestandteil des Sitzes ausgebeult, insbesondere periodisch. Der weitere Bestandteil ist hierfür geeignet, zweckmäßigerweise vorgesehen und eingerichtet. Der Elektromotor ist beispielsweise ein bürstenbehafteter Kommutatormotor. Besonders bevorzugt jedoch ist der Elektromotor bürstenlos ausgestaltet und insbesondere ein bürstenloser Gleichstrommotor (BLDC). Beispielsweise ist der Elektromotor ein Asynchronmotor, bevorzugt jedoch ein Synchronmotor. Der Elektromotor ist insbesondere dreiphasig, wobei die einzelnen Phasen beispielsweise in einer Dreiecks- oder Sternschaltung miteinander verschaltet sind.

Das Verfahren sieht vor, dass in einem Arbeitsschritt der Elektromotor bestromt wird. Hierfür wird beispielsweise eine bestimmte elektrische Spannung an den Elektromotor angelegt. Insbesondere ist die elektrische Spannung vorgegeben. Alternativ hierzu wird beispielsweise ein elektrischer Stromfluss zu dem Elektromotor eingestellt. Insbesondere erfolgt die Bereitstellung der elektrischen Spannung / des elektrischen Stroms mittels eines Umrichters, der beispielsweise eine Brückenschaltung, wie eine B6-Schaltung aufweist.

In einem weiteren Arbeitsschritt wird das Drehmoment des Elektromotors erfasst. Mit anderen Worten wird das Drehmoment des Elektromotors bestimmt, welches sich aufgrund der Bestromung ergibt. Anhand des Drehmoments wird ein erster Referenzwert ermittelt. Der erste Referenzwert weist als mögliche Wertemenge beispielsweise lediglich zwei Werte auf. Insbesondere wird hierbei der eine Wert für den ersten Referenzwert herangezogen, wenn das Drehmoment oberhalb einer bestimmten Schwelle liegt und ansonsten der andere Wert. Alternativ hierzu ist der Wertbereich des ersten Referenzwerts vergrößert und/oder insbesondere diskret. Alternativ hierzu ist der Wertbereich des ersten Referenzwerts kontinuierlich. Zumindest besteht ein funktioneller Zusammenhang zwischen dem ersten Referenzwert und dem Drehmoment, wobei beispielsweise eine ein-eindeutige Zuordnung erfolgt. Beispielsweise wird als erster Referenzwert das erfasste Drehmoment herangezogen.

In einem weiteren Arbeitsschritt wird anhand des ersten Referenzwerts eine Belegung zumindest eines Abschnitts des Sitzes ermittelt. Insbesondere entspricht der Abschnitt vollständig oder zumindest zum Teil dem Bestandteil des Sitzes, welcher bei Bestromung des Elektromotors bewegt wird. Mit anderen Worten wird aus dem ersten Referenzwert auf die Belegung des Abschnitts geschlossen. Die Belegung ist insbesondere eine Belastung des Abschnitts aufgrund der Anwesenheit einer Person. Mit anderen Worten wird ermittelt, ob die Person auf dem Abschnitt sitzt oder an diesen angelehnt ist, also ob die Person, insbesondere ein Fahrer des Kraftfahrzeugs, in mechanischem Kontakt mit dem Abschnitt ist. Somit wird anhand des Drehmoments des Elektromotors bzw. anhand des hieraus abgeleiteten ersten Referenzwerts die Belegung des Abschnitts des Sitzes ermittelt. Sofern zur Verbringung des Abschnitts ein vergleichsweise hohes Drehmoment erforderlich ist und somit vorherrscht, ist eine Belegung des Abschnitts wahrscheinlich. Sofern der Abschnitt nicht belegt ist, ist lediglich ein vergleichsweise geringes Drehmoment erforderlich. Folglich ist es daher ermöglicht mittels des Drehmoments und daher auch mittels des ersten Referenzwerts die Belegung des Abschnitts zu bestimmen. Infolgedessen sind keine weiteren Sensoren oder dergleichen erforderlich, weswegen Herstellungskosten verringert sind. Beispielsweise wird die Belegung binär ermittelt, also ermittelt, ob eine Belegung vorhanden oder nicht vorhanden ist. Alternativ hierzu wird die Belegung qualitativ ermittelt, also insbesondere, mit wie viel Druck/Gewicht der Abschnitt belastet ist.

Zweckmäßigerweise weist die elektromotorische Massageeinrichtung mehrere derartige Massageantriebe auf, die unterschiedlichen Abschnitten des Sitzes zugeordnet sind. Somit ist es ermöglicht, die Position des Benutzers auf dem Sitz mittels der Massageantriebe zu bestimmen. Insbesondere wird anhand der Belegung eine Sitzposition des Benutzers auf dem Sitz bestimmt. In Abhängigkeit der ermittelten (Sitz-)Position des Benutzers wird beispielsweise eine mögliche Verstellbewegung des Sitzes begrenzt, insbesondere eine elektromotorische Verstellung des Sitzes, z.B. eine elektromotorische Verstellung der Lehne des Sitzes, also deren Neigungswinkel bezüglich der Sitzfläche, oder einer transversalen Verbringung des Sitzes. Alternativ oder in Kombination hierzu wird anhand der ermittelten Sitzposition eine weitere Einstellung des Kraftfahrzeugs vorgenommen, sofern die elektromotorische Massageeinrichtung ein Bestandteil des Kraftfahrzeugs ist. Beispielsweise wird eine Einstellung einer etwaige Klimaanlage, eines Audio-Systems oder eines Gurtes / Gurtantriebs beeinflusst. Folglich ist ein Komfort weiter erhöht.

Das Drehmoment des Elektromotors wird beispielsweise anhand der Stromaufnahme bestimmt. Mit anderen Worten wird der erste Referenzwert aus der Stromaufnahme ermittelt. Beispielsweise wird der elektrische Stromfluss zu dem Elektromotor erfasst und hieraus das Drehmoment abgeleitet. Beispielsweise wird hierfür ein Motormodell herangezogen. Alternativ hierzu wird als Drehmoment bereits der elektrische Strom direkt verwendet, was eine Berechnung vereinfacht. Aufgrund der Bestimmung der Stromaufnahme ist lediglich ein vergleichsweise kostengünstiger Sensor erforderlich, der beispielsweise vorhanden ist, insbesondere sofern der Elektromotor geregelt wird. Infolgedessen sind Herstellungskosten reduziert.

Vorzugsweise wird zur Ermittlung der Belegungen der erste Referenzwert mit einem zweiten Referenzwert verglichen. Bei dem Vergleich wird beispielsweise überprüft, ob der erste Referenzwert größer als der zweite Referenzwert oder umgekehrt ist. Sofern der erste Referenzwert größer bzw. kleiner als der zweite Referenzwert ist, ist insbesondere die Belegung erkannt. Der zweite Referenzwert ist beispielsweise anhand eines theoretischen Models vorgegeben und/oder anhand des verwendenden Elektromotors vorgegeben und/oder ermittelt. Besonders bevorzugt jedoch wird der zweite Referenzwert aus einem Drehmoment des Elektromotors ermittelt, das sich ergibt, wenn der Abschnitt nicht belegt ist. Mit anderen Worten wird zunächst sichergestellt, dass der Abschnitt nicht belegt ist und der Elektromotor im Anschluss bestromt. Das resultierende Drehmoment des Elektromotors wird erfasst und hieraus der zweite Referenzwert ermittelt. Beispielsweise wird der zweite Referenzwert in der gleichen Weise ermittelt, wie der erste Referenzwert. Mit anderen Worten wird die gleiche Rechenvorschrift zur Ermittlung des zweiten Referenzwerts herangezogen wie zur Ermittlung des ersten Referenzwerts. Zum Beispiel wird das Drehmoment als zweiter Referenzwert herangezogen. Vorzugsweise wird zusätzlich ein Toleranzwert oder dergleichen verwendet, sodass der zweite Referenzwert in der gleichen Weise wie der erste Referenzwert ermittelt wird und zu diesem Ergebnis der Toleranzwert addiert wird. Dieses Ergebnis wird als zweiter Referenzwert verwendet.

Geeigneterweise erfolgt die Ermittlung des zweiten Referenzwerts und somit die Sicherstellung, dass der Abschnitt nicht belegt ist, wenn das Kraftfahrzeug verschlossen ist und beispielsweise von außerhalb abgeschlossen wurde. Alternativ hierzu wird beispielsweise direkt nach einem Entriegeln des Kraftfahrzeugs von Außen der zweite Referenzwert ermittelt. In einer weiteren Alternative wird der zweite Referenzwert beispielsweise nach Fertigung der elektromotorischen Massageeinrichtung und beispielsweise nach Fertigung des Kraftfahrzeugs ermittelt, insbesondere auf einem Prüfstand. Der zweite Referenzwert wird beispielsweise in einem Speicher der elektromotorischen Massageeinrichtung hinterlegt. Alternativ hierzu wird der zweite Referenzwert neu ermittelt, beispielsweise zyklisch. Auf diese Weise wird beispielsweise ein Verschleiß oder dergleichen berücksichtigt.

Beispielsweise wird der erste Referenzwert anhand einer Änderung des Drehmoments des Elektromotors ermittelt. Mit anderen Worten wird zunächst die Änderung des Drehmoments ermittelt und anhand derer der erste Referenzwert bestimmt. Insbesondere wird auf diese Weise bestimmt, wann sich das Drehmoment des Elektromotors ändert. Hierbei wird insbesondere der Drehmomentverlauf oder eine hierzu korrespondierende Größe ermittelt. Wenn sich das Drehmoment ändert, ist beispielsweise der erste Referenzwert bestimmt. Dieser korrespondiert geeigneterweise zu einer bestimmten Winkelstellung des Elektromotors. Insbesondere sofern mittels des Elektromotors ein Stempel oder dergleichen angetrieben wird, ändert sich das Drehmoment, wenn der Stempel gegen einen Bezug des Sitzes verfahren wird und diesen beispielsweise nach außen ausbeult. Daher tritt eine Erhöhung des Drehmoments aufgrund des mechanischen Widerstandes auf, der zumindest mittels des Bezugs und beispielsweise aufgrund der Belegung vorhanden ist. Mit anderen Worten wird in diesem Fall der Stempel gegen den Benutzer verfahren. Dieser Punkt wird beispielsweise als erster Referenzwert herangezogen oder zumindest die Winkelstellung des Elektromotors. Somit wird bestimmt, ab welcher Winkelstellung des Elektromotors das Drehmoment zur Verbringung des Bezugs des Sitzes oder zumindest einer Oberfläche des Sitzes aufgebracht werden muss. Sofern der Abschnitt belegt ist, ist dieser Punkt in Richtung des Elektromotors versetzt, zumindest wenn der Sitz zumindest teilweise nachgiebig ausgestaltet ist. Folglich wird aufgrund der Winkelstellung des Elektromotors, bei dem der Anstieg des Drehmoments erfolgt, auf die Position der Oberfläche des Abschnitts geschlossen und somit darauf, ob dieser belegt ist.

Zweckmäßigerweise wird die Bestromung des Elektromotors anhand des ersten Referenzwerts angepasst. Vorzugsweise wird die Bestromung des Elektromotors angepasst, wenn keine Belegung des Abschnitts ermittelt ist. Insbesondere wird die Bestromung des Elektromotors beendet, was einen Energiebedarf verringert. Auch ist auf diese Weise eine Erwärmung des Elektromotors ausgeschlossen, sodass eine Lebensdauer erhöht ist. Alternativ hierzu wird zumindest der Elektromotor bei einer Drehzahl betrieben, bei der das Aussenden von akustischen Wellen verringert ist. Somit ist ein Komfort erhöht und ein akustischer Eindruck verbessert. Geeigneterweise wird die Bestromung des Elektromotors verstärkt, wenn eine Belegung vorherrscht, die jedoch vergleichsweise gering ist. Falls die Belegung vorhanden und vergleichsweise stark ist, wird beispielsweise die Bestromung verringert, um eine Überlastung des Elektromotors zu verringern. Insbesondere wird ein Bewegungsmuster des Elektromotors angepasst, insbesondere sofern die Belegung qualitativ bestimmt / ermittelt wird. Somit ist ein Komfort weiter erhöht.

Beispielsweise wird der Referenzwert mittels einer Kalibrierfahrt ermittelt. Hierfür wird beispielsweise nach einer Aktivierung der elektromotorischen Massageeinrichtung der erste Referenzwert ermittelt und somit die Belegung. Der erste Referenzwert und die auf diese Weise ermittelte Belegung werden beispielsweise während des Betriebs der elektromotorischen Massageeinrichtung nicht nochmals ermittelt und sind somit während des gesamten Betriebs konstant. Beispielsweise wird der erste Referenzwert und somit die Belegung ermittelt, wenn eine Benutzereingabe vorliegt. Geeigneterweise korrespondiert die Benutzereingabe zu einer Aktivierung der elektromotorischen Massageeinrichtung. Besonders bevorzugt wird der erste Referenzwert zyklisch erneut ermittelt, beispielsweise alle 5 Sekunden, alle 10 Sekunden, jede Minute, alle 5 Minuten oder alle 10 Minuten. Somit wird die Belegung des Abschnitts ebenfalls zyklisch neu ermittelt, und es ist somit insbesondere möglich, die Bestromung des Elektromotors und/oder weiterer etwaiger Funktionen des etwaigen Kraftfahrzeugs in Abhängigkeit der aktuellen Belegung zu beeinflussen.

Die elektromotorische Massageeinrichtung ist ein Bestandteil eines Sitzes und beispielsweise ein Bestandteil eines Kraftfahrzeugs. Insbesondere ist die elektromotorische Massageeinrichtung ein Bestandteil eines Fahrersitzes oder eines Beifahrersitzes. Die elektromotorische Massageeinrichtung weist einen Massageantrieb mit einem Elektromotor sowie eine Steuereinrichtung auf. Die elektromotorische Massageeinrichtung dient dem Bereitstellen einer Massagefunktion. Zweckmäßigerweise ist der Massageantrieb vorgesehen und eingerichtet, einen Abschnitt des Sitzes, beispielweise eine Lehne, eine Sitzfläche oder zumindest einen Teil hiervon, zu verstellen, insbesondere periodisch. Beispielsweise wird der Abschnitt ausgebeult.

Die elektromotorische Massageeinrichtung ist gemäß einem Verfahren betrieben, bei dem der Elektromotor bestromt wird, und bei dem ein Drehmoment des Elektromotors erfasst sowie hieraus ein erster Referenzwert ermittelt wird. Anhand des ersten Referenzwerts wird eine Belegung zumindest des Abschnitts des Sitzes ermittelt. Beispielsweise wird die elektromotorische Massageeinrichtung verwendet, um das Verfahren durchzuführen. Zweckmäßigerweise wird bei Betrieb des Elektromotors der Abschnitt oder zumindest ein Bereich des Abschnitts mittels des Elektromotors bewegt. Insbesondere ist die Steuereinrichtung geeignet, vorzugsweise vorgesehen und eingerichtet, das Verfahren durchzuführen. Die Steuereinrichtung ist beispielsweise eine zentrale Steuereinrichtung (Steuergerät) der elektromotorischen Massageeinrichtung oder ein Bestandteil des Massageantriebs und geeigneterweise an dem Elektromotor befestigt. Zum Beispiel dient die Steuereinrichtung zusätzlich der Einstellung der Bestromung des Elektromotors. Vorzugsweise umfasst die elektromotorische Massageeinrichtung zusätzlich ein zentrales Steuergerät, mittels dessen beispielsweise eine Kommunikation mit weiteren Bestandteilen, beispielsweise einer Eingabevorrichtung und/oder einem Bussystem erfolgt, insbesondere sofern die Massageeinrichtung ein Bestandteil des Kraftfahrzeugs ist.

Der Massageantrieb weist beispielsweise eine mittels des Elektromotors angetriebene Unwucht auf. Aufgrund dieser Unwucht wird geeigneterweise der Massageantrieb in eine Bewegung versetzt, wobei diese Bewegung periodisch ist. Hierbei ist der Massageantrieb im Montagezustand zweckmäßigerweise mit einem weiteren Bestandteil des Sitzes gekoppelt, beispielsweise einer etwaigen Lehne oder Sitzfläche, so dass mittels der Unwucht der jeweilige Bestandteil bewegt, insbesondere ausgebeult, wird.

Zweckmäßigerweise weist der Massageantrieb einen in eine vorgegebene Richtung beweglichen und federbelasteten Stempel auf. Hierbei ist der Stempel insbesondere mittels der Feder in die vorgegebene Richtung belastet. Die vorgegebene Richtung ist zweckmäßigerweise auf den Abschnitt zu gerichtet. Geeigneterweise ist die vorgegebene Richtung in Richtung eines Bezugs des Sitzes gerichtet und insbesondere senkrecht zu diesem. Die Feder ist beispielsweise eine Schraubenfeder oder ein pneumatisches Federelement. Vorzugsweise ist die Feder eine Druckfeder. Die Position des Stempels in der vorgegebenen Richtung ist mittels eines Seils begrenzt. Beispielsweise ist das Seil an dem Stempel angebunden. Zumindest wird mittels des Seils die Bewegung des Stempels in der vorgegebenen Richtung begrenzt. Hierbei ist beispielsweise auch eine weitere Begrenzung der Position des Stempels in der vorgegebenen Bewegung möglich, beispielsweise aufgrund der Belegung des Abschnitts. Zumindest wird mittels des Seils eine theoretisch maximale Position des Stempels in der vorgegebenen Richtung vorzugsweise begrenzt.

Insbesondere wirkt hierbei das Seil entgegen der Kraftrichtung der Feder. Somit wird mittels des Seils entgegen der Federkraft der Stempel verbracht und in dieser Position mittels des Seils gehalten. Das Seil ist beispielsweise aus einem Kunststoff gefertigt. Insbesondere ist das Seil biegeschlaff. Alternativ hierzu ist das Seil starr und beispielsweise nach Art einer Zahnstange gefertigt. Das Seil ist in Wirkverbindung mit dem Elektromotor. Beispielsweise ist das Seil zumindest teilweise auf einer Seilrolle aufgewickelt, die mittels des Elektromotors angetrieben ist. Somit wird bei der Bestromung des Elektromotors mittels des Seils die Position des Stempels in der vorgegebenen Richtung eingestellt.

Beispielsweise korrespondiert der erste Referenzwert zur Ausdehnung der Feder. Die Ausdehnung der Feder korrespondiert insbesondere zur Ausdehnung des Seils. Beispielsweise korrespondiert der erste Referenzwert zur Ausdehnung der Feder, wenn das Seil von einem schlaffen in einen gespannten Zustand übergeht. Dieser Wechsel des Zustands des Seils wird insbesondere anhand einer Zunahme des Drehmoments ermittelt. Sofern der Stempel beispielsweise an dem Abschnitt anliegt, ist dessen Position somit mittels des Abschnitts bestimmt. In diesem Fall ist das Seil beispielsweise zwischen dem Stempel und der etwaigen Seilrolle nicht gespannt.

Zur Bestimmung der Belegung wird geeigneterweise zunächst das Seil im Wesentlichen vollständig freigegeben und die Position des Stempels somit mittels des Abschnitts bestimmt. Mit anderen Worten liegt der Stempel geeigneterweise an dem Abschnitt an, und das Seil ist schlaff. Der Elektromotor wird im Anschluss angetrieben und das Seil zumindest teilweise auf die Seilrolle aufgerollt. Wenn das Seil gespannt ist, ist es erforderlich mittels des Elektromotors ein größeres Drehmoment auf die Seilrolle und somit eine größere Kraft aufzuwenden, die entgegen der Federkraft wirkt, um den Stempel von dem Abschnitt zu beabstanden. Die Ausdehnung der Feder bzw. des Seils bei diesem Anstieg des Drehmoments wird zweckmäßigerweise als erster Referenzwert herangezogen. Insbesondere wird hierbei der erste Wert mit dem zweiten Referenzwert verglichen, der insbesondere ermittelt wird, wenn der Abschnitt nicht belegt ist. Sofern die Ausdehnung der Feder kleiner als die Ausdehnung der Feder im unbelegtem Zustand ist, also insbesondere sofern der erste Referenzwert kleiner als der zweite Referenzwert ist, ist insbesondere die Belegung ermittelt.

Der Sitz ist ein Bestandteil eines Kraftfahrzeugs und weist eine elektromotorische Massageeinrichtung auf. Der Sitz ist somit ein Fahrzeugsitz und zweckmäßigerweise ein Fahrersitz, also der Sitz, der von einem Führer des Kraftfahrzeugs eingenommen wird. Der (Fahrzeug-)Sitz umfasst insbesondere eine Sitzfläche und geeigneterweise eine Lehne. Die Sitzfläche und/oder die Lehne weisen zweckmäßigerweise ein Formteil aus Kaltschaum auf, welcher mittels eines Überzugs versehen ist, beispielsweise einem Stoff oder Leder. Die elektromotorische Massageeinrichtung weist einen Massageantrieb mit einem Elektromotor auf. Der Massageantrieb ist zweckmäßigerweise in einer Aussparung innerhalb des Formteils aus Kaltschaum angeordnet, und bei Betrieb wird geeigneterweise der Überzug, also insbesondere der Stoff oder das Leder, ausgebeult, insbesondere periodisch. Die elektromotorische Massageeinrichtung umfasst ferner eine Steuereinrichtung und ist gemäß einem Verfahren betrieben, bei dem der Elektromotor bestromt wird, und ein Drehmoment des Elektromotors erfasst und hieraus ein erster Referenzwert ermittelt wird. Anhand des ersten Referenzwerts wird eine Belegung zumindest eines Abschnitts des Sitzes ermittelt.

Die im Zusammenhang mit dem Verfahren zum Betrieb der elektromotorischen Massageeinrichtung erläuterten Weiterbildungen und Vorteile sind sinngemäß auch auf die elektromotorische Massageeinrichtung/Verwendung und/oder den Sitz zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug mit einem eine elektromotorische Massageeinrichtung umfassenden Sitz,
- Fig. 2: perspektivisch den Sitz mit der elektromotorischen Massageeinrichtung,
- Fig. 3: perspektivisch die elektromotorischen Massageeinrichtung mit mehreren Massageantrieben,
- Fig. 4: schematisch einen der Massageantriebe,
- Fig. 5: schematisch eine weitere Ausführungsform des Massageantriebs, und
- Fig. 6: ein Verfahren zum Betrieb der elektromotorischen Massageeinrichtung.

Einander entsprechende Teile sind in allen Figuren mit den gleichen Bezugszeichen versehen.

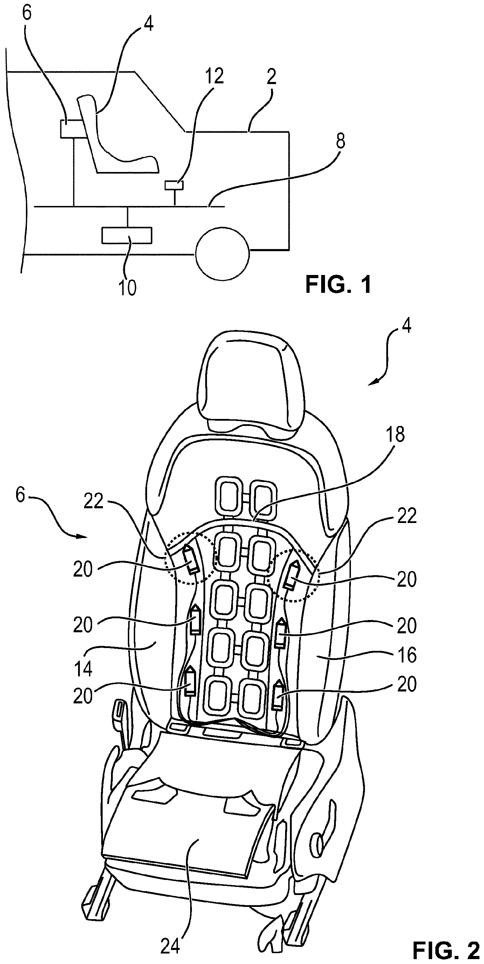

In Fig. 1 ist schematisch vereinfacht ein Kraftfahrzeug 2 mit einem (Fahrzeug)Sitz 4 gezeigt. Der Fahrzeugsitz 4 umfasst eine elektromotorische Massageeinrichtung 6, die mit einem BUS-System 8 signaltechnisch verbunden ist. Das BUS-System 8 basiert auf dem CAN-Standard, und ein Bordcomputer 10 sowie ein weiterer BUS-Teilnehmer 12 sind jeweils ein Bestandteil des BUS-Systems 8. Mittels des Bordcomputers 10 werden Anforderungen an die elektromotorische Massageeinrichtung 6 sowie den weiteren BUS-Teilnehmer 12 übertragen. Auch findet ein Austausch von Betriebsdaten über das BUS-System 8 statt.

In Fig. 2 ist der als Fahrersitz ausgestaltete Sitz 4 perspektivisch, jedoch ohne einen Sitzbezug, dargestellt. Der (Fahrer-)Sitz 4 umfasst eine Rückenlehne 14, welche ein Formteil 16 aus einem Kaltschaum umfasst, in das eine der Stabilisierung dienende Haltestruktur 18 aus einem Metall eingebettet ist. Das Formteil 16 weist eine Anzahl an Ausnehmungen auf, wobei innerhalb jeder jeweils ein Massageantrieb 20 der elektromotorischen Massageeinrichtung 6 angeordnet ist. Die Massageantriebe 20 sind zueinander beabstandet, und jedem der Massageantriebe 20 ist ein Abschnitt 22 zugeordnet. Die Abschnitte 22 korrespondieren zu den Bereichen des Sitzes 4, die bei Betrieb des jeweils zugeordneten Massageantriebs 20 ausgebeult oder zumindest bewegt werden. Der Sitz 4 weist ferner eine Sitzfläche 24 auf, der ebenfalls nicht näher dargestellte Massageantriebe zugeordnet sind.

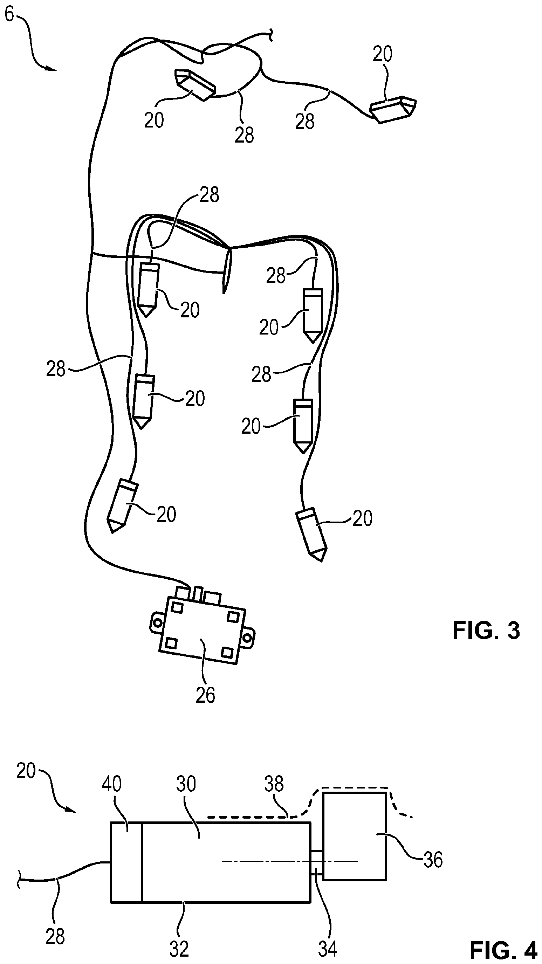

In Fig. 3 ist die elektromotorischen Massageeinrichtung 6 gezeigt, die ein Steuergerät 26 sowie die insgesamt acht Massageantriebe 20 aufweist. De Massageantriebe 20 sind jeweils mittels elektrischen Leitungen 28 mit dem Steuergerät 26 elektrisch und signaltechnisch gekoppelt.

In Fig. 4 ist eine erste Ausführungsform eines der Massageantriebe 20 dargestellt, wobei alle Massageantriebe 20 beispielsweise zueinander baugleich sind. Der Massageantrieb 20 weist einen Elektromotor 30 mit einem Gehäuse 32 aus einem metallischen Blech auf. An einer Welle 34 des Elektromotors 30 ist eine Unwucht 36 angebunden, die somit mittels des Elektromotors 32 angetrieben ist. Bei einer Rotationsbewegung des Elektromotors 32 und somit einer Rotationsbewegung der Unwucht 36 wird der Massageantrieb 20 in eine rhythmische Bewegung versetzt, sodass der zugeordnete Abschnitt 22 vibriert. Alternativ oder in Kombination hierzu wird ein Sitzbezug 38 des Sitzes 4 mittels der Unwucht 36 periodisch ausgebeult. Der Massageantrieb 20 umfasst eine Steuereinrichtung 40, mittels derer eine Bestromung des Elektromotors 32 erfolgt. Die Steuereinrichtung 40 ist elektrisch mit der elektrischen Leitung 28 kontaktiert, und bei Betrieb werden zwischen dem Steuergerät 26 und der Steuereinrichtung 40 mittels der elektrischen Leitung 28 Daten ausgetauscht, wobei mittels einer weiteren Ader der elektrischen Leitung 28 ein elektrischer Stromfluss zu der Steuereinrichtung 40 bereitgestellt wird.

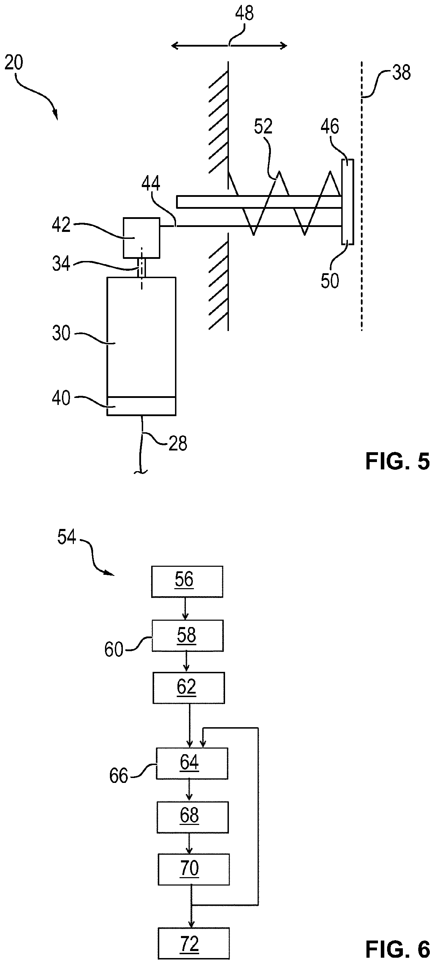

In Figur 5 ist eine weitere Ausgestaltungsform des Massageantriebs 20 schematisch vereinfacht gezeigt. Der Elektromotor 30, der ein bürstenloser Gleichstrommotor (BLDC) ist, die Steuereinrichtung 40 und deren Verbindung mit der elektrischen Leitung 28 sind nicht abgeändert. An der Welle 34 ist eine Seilrolle 42 drehfest angebunden, auf der ein Seil 44 zumindest teilweise aufgerollt ist. Das Seil 44 ist ferner an einem Stempel 46 befestigt, welcher in eine bestimmte Richtung 48 mittels einer nicht näher dargestellten Führung beweglich ist. Senkrecht zur bestimmten Richtung 48 ist eine Stempelplatte 50 des Stempels 46 angeordnet, die im Wesentlichen parallel zu dem Sitzbezug 38 angeordnet ist. Der Stempel 46 ist mittels einer Druckfeder 52 in Form einer Schraubenfeder belastet, sodass die Stempelplatte 50 mittels der Feder 52 von dem Elektromotor 30 gegen den Sitzbezug 38 in die vorgegebene Richtung 48 gedrückt wird. Hierfür ist die Feder 52 an einem ortsfesten Bauteil des Sitzes 4 abgestützt.

Die Position des Stempels 46 ist mittels des Seils 44 begrenzt, und mittels des Elektromotors 30 kann der Stempel 46 entgegen der mittels der Feder 42 aufgebrachten Kraft in der vorgegebenen Richtung 48 bewegt werden. Mittels Abrollen des Seils 44 von der Seilrolle 42 wird der Stempel 46, und im Speziellen die Stempelplatte 50, gegen den Sitzbezug 38 mittels der Feder 52 verbracht. Bei einem vergleichsweise schnellen Abrollen des Seils 44 wird somit der Sitzbezug 38 ausgebeult.

In Figur 6 ist ein Verfahren 54 zum Betrieb der elektromotorischen Massageeinrichtung 6 des Sitzes 4 gezeigt. Das Verfahren 54 wird entweder mittels jeder der Steuereinrichtungen 40 der Massageantriebe 20 oder mittels des Steuergeräts 26 ausgeführt. Sofern das Steuergerät 26 verwendet wird, wird das Verfahren 54 für jeden der Massageantriebe 20 einzeln durchgeführt, beispielsweise zeitlich nacheinander oder gleichzeitig. In einem ersten Arbeitsschritt 56, der ausgeführt wird, wenn das Kraftfahrzeug 2 von außen entriegelt wird, wird der Elektromotor 30 jedes der Massageantriebe 20 bestromt und folglich die Unwucht 36 bzw. der Stempel 46 bewegt. Hierfür wird mittels der Steuereinrichtung 40 an dem Elektromotor 30 eine elektrische Spannung angelegt. Somit ist im ersten Arbeitsschritt 56 der Sitz 4 nicht belegt und folglich auch keiner der Abschnitte 22.

In einem sich anschließenden zweiten Arbeitsschritt 58 wird das Drehmoment des Elektromotors 30 bestimmt. Hierfür wird die Stromaufnahme des Elektromotors 30 bestimmt, also der elektrische Stromfluss, der sich aufgrund des Anlegens der elektrischen Spannung ergibt. Sofern der Massageantrieb 20 gemäß Figur 4 ausgestaltet ist, ergibt sich hierbei eine durchschnittliche Stromaufnahme, die über mehrere Umdrehungen der Unwucht 36 gemittelt ist. Der durchschnittliche Wert der elektrischen Stromaufnahme wird hierbei als ein zweiter Referenzwert 60 herangezogen.

Sofern der Massageantrieb 20 gemäß Figur 5 ausgeführt ist, wird das Seil 44 mittels der Seilrolle 42 vollständig freigegeben. Infolgedessen bewegt sich die Stempelplatte 50 aufgrund der Feder 52 in die bestimmte Richtung 48 bis diese an dem Sitzbezug 38 anliegt und durch den Sitzbezug 38 zurückgehalten wird. Im Anschluss hieran wird die Seilrolle 42 in die umgekehrte Richtung bewegt und das Seil 44 aufgerollt. Solange dieses durchhängt, ist das mittels des Elektromotors 30 aufgebrachte Drehmoment vergleichsweise gering. Sobald das Seil 44 gestrafft ist und den Stempel 46 entgegen der Kraft der Feder 52 in die bestimmte Richtung 48 bewegt, steigt das Drehmoment an. Mit anderen Worten ändert sich das Drehmoment. Die an diesem Zeitpunkt vorliegende Stellung des Elektromotors 30 wird als der zweite Referenzwert 60 herangezogen. Somit korrespondiert der zweite Referenzwert 60 zur Ausdehnung der Feder 52, sofern der dem jeweiligen Massageantrieb zugeordnete Abschnitt 22 nicht belegt ist.

In einem dritten Arbeitsschritt 62 wird eine Aufforderung zum Starten der Massagefunktion der elektromotorischen Massageeinrichtung 6 über das Bus-System 8 empfangen. Diese wurde beispielsweise mittels des Bordcomputers 10 erstellt, welcher eine entsprechende Benutzereingabe erfasst hat. In diesem Fall sitzt der Fahrer des Kraftfahrzeugs auf dem Sitz 4, sodass zumindest Teile der Abschnitte 22 belegt sind. In einem sich anschließenden vierten Arbeitsschritt 64 wird der Elektromotor 30 bestromt. Ferner wird das resultierende Drehmoment des Elektromotors 30 erfasst, in dem die elektrische Stromaufnahme durch diesen bestimmt wird. Sofern der Massageantrieb 20 nach der in Figur 4 gezeigten Variante ausgestaltet ist, wird die durchschnittliche elektrische Stromaufnahme für ein bestimmtes Zeitfenster ermittelt, wobei hierbei beispielsweise mehrere Umdrehungen der Unwucht 36 vorliegen. Die sich auf diese Weise ergebende durchschnittliche elektrische Stromaufnahme wird als ein erster Referenzwert 66 herangezogen.

Sofern der Massageantrieb 20 gemäß der in Figur 5 dargestellten Variante ausgestaltet ist, wird wiederum das Seil 44 vollständig freigegeben und somit die Stempelplatte 50 mittels der Feder 52 gegen den Sitzbezug 38 gedrückt. Im Anschluss hieran wird wiederum das Seil 44 mittels der Seilrolle 42 aufgewickelt. Wenn das Seil 44 straff gespannt ist, erfolgt ein weiteres Aufrollen auf die Seilrolle 42 entgegen der Kraft der Feder 52, sodass das mittels des Elektromotors 30 aufgebrachte Drehmoment ansteigt und ebenfalls dessen elektrische Stromaufnahme. Die hierbei vorliegende Winkelstellung des Elektromotors 30, also insbesondere die Anzahl der zurückgelegten Umdrehungen nach vollständiger Freigabe des Seils 44, wird als der erste Referenzwert 66 herangezogen. Somit wird der erste Referenzwert 66 anhand einer Änderung des Drehmoments 30 ermittelt und der erste Referenzwert 33 korrespondiert zur Länge des Seils 44, welches nicht auf der Seilrolle 42 aufgerollt ist, und somit zur Ausdehnung der Feder 52.

In einem sich anschließenden fünften Arbeitsschritt 68 wird der erste Referenzwert 66 mit dem zweiten Referenzwert 60 verglichen. Hierbei wird, sofern der Massageantrieb 20 gemäß Figur 4 ausgestaltet ist, überprüft, ob der erste Referenzwert 66 größer als der zweite Referenzwert 60 ist, also ob die Stromaufnahme des Elektromotors 30 vergrößert ist. Sofern der Abschnitt 22 belegt ist, also sofern der Benutzer an dem Abschnitt 22 anliegt, ist es erforderlich, dass die Unwucht 36 nicht nur gegen den Sitzbezug sondern auch gegen den Körper des Fahrers bewegt wird, sodass das benötigte Drehmoment zur Rotation der Unwucht 36 erhöht ist. Folglich wird auf eine Belegung geschlossen, falls das Drehmoment und somit der erste Referenzwert 66 erhöht und größer als der zweite Referenzwert 60 ist. Das Schließen auf die Belegung erfolgt insbesondere qualitativ, also ob der Abschnitt 22 belegt ist, oder nicht. Alternativ hierzu erfolgt eine qualitative Bewertung, also wie stark der Fahrer an der Lehne 14 anliegt. Sofern der Massageantrieb 20 gemäß Figur 5 ausgestaltet ist, wird auf die Belegung geschlossen, wenn der erste Referenzwert 66 größer als der zweite Referenzwert 60 ist, also wenn die Seilrolle 42 um einen größeren Betrag rotiert ist, was zu einer verringerten Ausdehnung der Feder 52 in die bestimmte Richtung 48 korrespondiert.

In einem sich anschließenden sechsten Arbeitsschritt 70 wird die Bestromung des Elektromotors 30 anhand des ersten Referenzwerts 66 und anhand der ermittelten Belegung angepasst. Hierbei wird die Bestromung des Elektromotors 30 beendet, sofern der zugeordnete Abschnitt 22 nicht belegt ist. Alternativ erfolgt eine Bestromung derart, dass sich eine Drehzahl des Elektromotors 30 ergibt, bei der ein Aussenden von akustischen Wellen verringert ist. Sofern der in Figur 5 gezeigte Massageantrieb 20 verwendet wird, wird das Seil 40 bei Betrieb lediglich bis zum ersten Referenzwert 66 freigegeben. Infolgedessen wird der Stempel 46 gegen den Sitzbezug 38 bewegt. Im Anschluss hieran wird das Seil 44 wiederrum erneut aufgerollt und der Stempel 46 von dem Sitzbezug 38 beabstandet. Im Anschluss hieran wird wiederum das Seil 44 bis zum ersten Referenzwert 66 freigegeben. Somit wird der Sitzbezug 38 periodisch nach außen bewegt, wobei eine Belastung des Elektromotors 30 aufgrund eines Leerlaufs verringert ist. Auch ist der zeitliche Abstand zwischen dem Anlegen der Stempelplatte 50 an den Sitzbezug 38 und dem erneuten Beabstanden hiervon verringert.

Beispielsweise werden symmetrisch angeordnete Massageantriebe 20 stets gleich bestromt, was den Komfort erhöht. Die ermittelte Belegung wird mittels der elektrischen Leitungen 28 zu dem Steuergerät 26 übertragen und das Muster, mittels derer die Massageantriebe 20 betrieben werden, werden anhand der jeweils ermittelten Belegung angepasst. Auch wird ein Verstellweg der Sitzfläche 24 und der Rückenlehne 40 mittels eines nicht näher dargestellten elektromotorischen Antriebs verändert, sodass beispielsweise ein ungewolltes Verbringen, insbesondere in eine Position, bei der ein sicheres Sitzen nicht mehr ermöglicht ist, unterbunden wird. Auch wird die auf diese Weise ermittelte Belegung des Sitzes 4 mit weiteren Sensoren verglichen, die beispielsweise zum Auslösen eines Airbags herangezogen werden. Sofern eine Diskrepanz vorhanden ist, wird insbesondere eine Fehlermeldung ausgegeben.

Der erste Referenzwert 66 wird zyklisch neu ermittelt, wofür der vierte, fünfte und sechste Arbeitsschritt, 64, 68, 70 jede Minute ausgeführt wird. Die Elektromotoren 30 werden so lange bestromt, bis in einem siebten Arbeitsschritt 72 mittels des Steuergeräts 26 über das Bus-System 8 eine Aufforderung zum Beenden der Massagefunktion empfangen wird. Diese wird an sämtliche Steuereinrichtungen 40 übermittelt und der Betrieb der jeweiligen Elektromotoren 30 beendet.

Zusammenfassend sind die Massageantriebe 20 innerhalb der Formteile 16 verbaut, die insbesondere aus einem Sitzschaum erstellt sind. Die elektrische Stromaufnahme der Elektromotoren 30 der Massageantriebe 20 verändert sich in Abhängigkeit von der Belastung der Sitzfläche 24 / der Rückenlehne 14, also in Abhängigkeit der Belegung des zugeordneten Abschnitts 22. So ist insbesondere die elektrische Stromaufnahme jedes der Elektromotoren 30 abhängig von der Belastung der jeweiligen Sitzstruktur. Mittels Auswertung der elektrischen Stromaufnahme wird hierbei insbesondere die Belegung erkannt, also eine Sitzplatzerkennung realisiert. Sofern einer der Abschnitte 22 nicht belegt ist, wird der diesem Abschnitt 22 zugeordnete Massageantrieb 20 geringer bestromt oder gänzlich abgeschaltet. Das Verfahren 54 wird beispielsweise mittels der Steuereinrichtungen 40 oder dem Steuergerät 26 durchgeführt, welches somit als Steuereinrichtung fungiert.

Mit anderen Worten wird die Intensitätsverteilung, mittels derer Bereiche des Sitzes 4 mittels der Massageantriebe 20 bewegt werden, anhand der erfassten Belegung durch die Änderung der Bestromung der Elektromotoren 30 angepasst. Mittels einer vorab Charakterisierung der einzelnen Massageantriebe 20 im Leerlauf, also mittels Ermittlung des zweiten Referenzwerts 60 ist es mittels Vergleich mit dem ersten Referenzwert 66 möglich, anhand der elektrischen Stromaufnahme des jeweiligen Massageantriebs 20 zu bestimmen, ob eine Person auf dem Sitz 4 sitzt. Ferner ist es ermöglicht, zu erkennen, welcher der Massageantriebe 20 aktuell belastet und somit benutzt wird.

Die nicht verwendeten Massageantriebe 20 werden beispielsweise abgeschaltet oder in einem akustisch vorteilhaften Arbeitspunkt betrieben, also insbesondere bei einer niedrigeren Intensität. Beispielsweise werden symmetrisch angeordnete Massageantriebe 20 hierbei gleich bestromt, was den Komfort weiter erhöht. Bei einem Abschalten der einzelnen Elektromotoren 30 ist ein Energiebedarf verringert, und eine Systemtemperatur wird positiv beeinflusst. Ferner ist es ermöglicht, eine vergleichsweise detaillierte Sitzplatzbelegungserkennung zu realisieren, insbesondere im Hinblick auf einen modularen Fahrzeuginnenraum. Auch ist es ermöglicht eine etwaige vorhandene Sitzbelegungserkennung zu plausibilisieren. Alternativ entfällt eine weitere Sitzbelegungserkennung, was Kosten spart.

Bei der Verwendung des in Figur 5 dargestellten Massageantriebs 20 wird die Belastung der einzelnen Massageantriebe 20 ermittelt, und die Massage auf Basis dieser Informationen an den Insassen angepasst. Hierbei wird, nachdem eine Person auf dem Sitz 4 platzgenommen hat, eine Kalibrierfahrt vorgenommen und der erste Referenzwert 66 bestimmt. Hierbei werden die Seile 44 freigegeben, bis die Feder 52 ihre theoretische Endposition erreichen könnte, also die Position, die sich einstellen würden, wenn der jeweilige Abschnitt 22 nicht belastet ist, und der Stempel 46 mittels des Sitzbezugs 38 zurückgehalten wird. Die theoretische Endposition korrespondiert geeigneterweise zu dem zweiten Referenzwert 60. Aufgrund der Belastung durch den Benutzer, wenn der Abschnitt 22 belegt ist, ist die Ausdehnung der Federn 52 jedoch begrenzt, und der Stempel 46 kommt an einer abweichenden Position zu stehen. Infolge dessen hängt das Seil 44 durch. Im Nachgang wird das Seil 44 mittels der Seilrolle 42 aufgerollt. Solange das Seil 44 durchhängt, also noch nicht gegen die Federkraft arbeitet, ist der benötigte elektrische Strom zum Antrieb des Elektromotors 30 vergleichsweise gering. Sobald das Seil 44 nicht mehr durchhängt und die Feder 52 komprimiert wird, steigt die elektrische Stromaufnahme an und folglich auch das Drehmoment. Diese Position, an der dies eintritt wird, von der elektromotorischen Massageeinrichtung 6 gespeichert und insbesondere als erster Referenzwert 66 herangezogen. Hieraus ergibt sich über die Federhärte die Druckverteilung im Sitz 4. Infolgedessen ist es ermöglicht, die Verfahrwege der einzelnen Stempel 46 anzupassen oder ein ganzes Massagemuster zu adaptieren.

Ferner ist es ermöglicht die gemessenen Informationen über die Belegung, also über die Druckverteilung, zu verwenden, um die Massagefunktion anzupassen, also insbesondere ein bestimmtes Muster mittels der Elektromotoren 30 zu realisieren oder einzelne Elektromotoren 30 abzuschalten. Alternativ oder in Kombination hierzu werden die gemessenen Informationen über die Belegung (Druckverteilung) auf der Sitzfläche 24 und / oder an der Lehne 14 genutzt, um unterschiedliche Verstellmöglichkeiten des Sitzes 4 anzupassen, also beispielsweise eine Verstellgeschwindigkeit der Rückenlehne 14 oder der Sitzfläche 24 zu verändern. Alternativ oder in Kombination hierzu werden anhand der Informationen weitere Einstellungen des Kraftfahrzeugs 2 auf den Benutzer angepasst.

Ferner ist es ermöglicht, mittels der elektromotorischen Massageeinrichtung 6 Informationen über den Benutzer zu gewinnen, wie beispielsweise dessen Körpergröße, dessen Proportionen, dessen Haltung, dessen Sitzposition und / oder dessen Gewichts. Beispielsweise werden diese Informationen gespeichert. Ferner ist es ermöglicht, die Massagefunktion an den Benutzer anzupassen, weswegen ein Komfort erhöht ist. Auch ist es ermöglicht etwaige elektrische Sitzverstellungen auf den Benutzer anzupassen, was wiederum den Komfort erhöht. Auch können weitere Einstellungen des Kraftfahrzeugs 2 anhand der ermittelten Daten angepasst werden, was wiederum zu einer Erhöhung des Komforts führt. Beispielsweise wird die Ermittlung des ersten und/oder zweiten Referenzwerts 60, 66 in einer Kalibrierfahrt ermittelt, die beispielsweise automatisch oder in Abhängigkeit einer Benutzereingabe erfolgt.

### Bezugszeichenliste

- 2: Kraftfahrzeug
- 4: Sitz
- 6: elektromotorische Massageeinrichtung
- 8: BUS-System
- 10: Bordcomputer
- 12: weiterer BUS-Teilnehmer
- 14: Rückenlehne
- 16: Formteil
- 18: Haltestruktur
- 20: Massageantrieb
- 22: Abschnitt
- 24: Sitzfläche
- 26: Steuergerät
- 28: elektrische Leitung
- 30: Elektromotor
- 32: Gehäuse
- 34: Welle
- 36: Unwucht
- 38: Sitzbezug
- 40: Steuereinrichtung
- 42: Seilrolle
- 44: Seil
- 46: Stempel
- 48: bestimmte Richtung
- 50: Stempelpatte
- 52: Feder
- 54: Verfahren
- 56: erster Arbeitsschritt
- 58: zweiter Arbeitsschritt
- 60: zweiter Referenzwert
- 62: dritter Arbeitsschritt
- 64: vierter Arbeitsschritt
- 66: erster Referenzwert
- 68: fünfter Arbeitsschritt
- 70: sechster Arbeitsschritt
- 72: siebter Arbeitsschritt

## Patentansprüche

1. Verfahren (52) zum Betrieb einer elektromotorischen Massageeinrichtung (6) eines Sitzes (4), insbesondere eines Kraftfahrzeugs (2), die einen Massageantrieb (20) mit einem Elektromotor (30) umfasst, bei dem
- der Elektromotor (30) bestromt wird,
- ein Drehmoment des Elektromotors (30) erfasst und hieraus ein erster Referenzwert (66) ermittelt wird, und
- anhand des ersten Referenzwerts (66) eine Belegung zumindest eines Abschnitts (22) des Sitzes (4) ermittelt wird.

2. Verfahren (54) nach Anspruch 1,
**dadurch gekennzeichnet,**
**dass** das Drehmoment des Elektromotors (30) anhand einer Stromaufnahme bestimmt wird.

3. Verfahren (54) nach Anspruch 1 oder 2,
**dadurch gekennzeichnet,**
**dass** zur Ermittlung der Belegung der erste Referenzwert (66) mit einem zweiten Referenzwert (60) verglichen wird, wobei der zweite Referenzwert (60) aus einem Drehmoment des Elektromotors (30) ermittelt wird, das sich ergibt, wenn der Abschnitt (22) nicht belegt ist.

4. Verfahren (54) nach einem der Ansprüche 1 bis 3,
**dadurch gekennzeichnet,**
**dass** der erste Referenzwert (66) anhand einer Änderung des Drehmoments des Elektromotors (30) ermittelt wird.

5. Verfahren (54) nach einem der Ansprüche 1 bis 4,
**dadurch gekennzeichnet,**
**dass** die Bestromung des Elektromotors (30) anhand des ersten Referenzwerts (66) angepasst wird.

6. Verfahren (54) nach einem der Ansprüche 1 bis 5,
**dadurch gekennzeichnet,**
**dass** der erste Referenzwert (66) zyklisch neu ermittelt wird.

7. Elektromotorische Massageeinrichtung (6) eines Sitzes (4), insbesondere eines Kraftfahrzeugs (2), die einen Massageantrieb (20) mit einem Elektromotor (30) und eine Steuereinrichtung (26, 40) umfasst, und die gemäß einem Verfahren (54) nach einem der Ansprüche 1 bis 6 betrieben ist.

8. Elektromotorische Massageeinrichtung (6) nach Anspruch 7,
**dadurch gekennzeichnet,**
**dass** der Massageantrieb (20) einen in eine vorgegebene Richtung (48) beweglichen und federbelasteten Stempel (46) aufweist, wobei die Position des Stempels (46) in der vorgegebenen Richtung (48) mittels eines Seils (44) begrenzt ist, das in Wirkverbindung mit dem Elektromotor (30) ist.

9. Elektromotorische Massageeinrichtung (6) nach Anspruch 8,
**dadurch gekennzeichnet,**
**dass** der erste Referenzwert (66) zur Ausdehnung der Feder (52) korrespondiert.

10. Sitz (4) eines Kraftfahrzeugs (2), mit einer elektromotorischen Massageeinrichtung (6) nach einem der Ansprüche 7 bis 9.

## Claims

1. Method (52) for operating an electromotive massage device (6) of a seat (4), in particular of a motor vehicle (2), which has a massage drive (20) with an electric motor (30), in which
- the electric motor (30) is energized,
- a torque of the electric motor (30) is detected and from that a first reference value (66) is determined, and
- an occupancy of at least one section (22) of the seat (4) is determined on the basis of the first reference value (66).

2. Method (54) according to Claim 1,
**characterized in**
**that** the torque of the electric motor (30) is determined based on a current consumption.

3. Method (54) according to Claim 1 or 2,
**characterized in**
**that** to determine the occupancy the first reference value (66) is compared with a second reference value (60), wherein the second reference value (60) is determined from a torque of the electric motor (30), which results when the section (22) is not occupied.

4. Method (54) according to any of Claims 1 to 3,
**characterized in**
**that** the first reference value (66) is determined on the basis of a change in the torque of the electric motor (30).

5. Method (54) according to any of Claims 1 to 4,
**characterized in**
**that** the current supply to the electric motor (30) is adjusted on the basis of the first reference value (66).

6. Method (54) according to any of Claims 1 to 5,
**characterized in**
**that** the first reference value (66) is re-determined cyclically.

7. Electromotive massage device (6) of a seat (4), in particular of a motor vehicle (2), which comprises a massage drive (20) with an electric motor (30) and a control device (26, 40), and which is operated according to a method (54) according to one of Claims 1 to 6.

8. Electromotive massage device (6) according to Claim 7,
**characterized in**
**that** the massage drive (20) has a spring (46) which is movable in a predetermined direction (48) and spring-loaded, wherein the position of the stamp (46) is limited in the predetermined direction (48) by means of a rope (44), which is in operative connection with the electric motor (30).

9. Electromotive massage device (6) according to Claim 8,
**characterized in**
**that** the first reference value (66) corresponds to the expansion of the spring (52).

10. Seat (4) of a motor vehicle (2), with an electromotive massage device (6) according to one of Claims 7 to 9.

## Revendications

1. Procédé (52) de fonctionnement d'un dispositif de massage à moteur électrique (6) d'un siège (4), notamment d'un véhicule automobile (2), qui a un mécanisme de massage (20) avec un moteur électrique (30), dans lequel
- le moteur électrique (30) est alimenté en courant,
- un couple du moteur électrique (30) est détecté et une première valeur de référence (66) en est déterminée, et
- une occupation d'au moins une section (22) du siège (4) est déterminée sur la base de la première valeur de référence (66).

2. Procédé (54) selon la revendication 1,
**caractérisé en ce**
**que** le couple du moteur électrique (30) est déterminé sur la base d'une consommation de courant.

3. Procédé (54) selon la revendication 1 ou 2,
**caractérisé en ce**
**que** pour déterminer l'occupation le première valeur de référence (66) est comparée avec un deuxième valeur de référence (60), dans lequel la deuxième valeur de référence (60) est déterminé à partir d'un couple du moteur électrique (30), qui résulte lorsque la section (22) n'est pas occupée.

4. Procédé (54) selon l'une des revendications 1 à 3,
**caractérisé en ce**
**que** la première valeur de référence (66) est déterminée sur la base d'une variation du couple du moteur électrique (30).

5. Procédé (54) selon l'une des revendications 1 à 4,
**caractérisé en ce**
**que** l'alimentation en courant du moteur électrique (30) est ajustée sur la base de la première valeur de référence (66).

6. Procédé (54) selon l'une des revendications 1 à 5,
**caractérisé en ce**
**que** la première valeur de référence (66) est déterminée à nouveau de manière cyclique.

7. Dispositif de massage à moteur électrique (6) d'un siège (4), notamment d'un véhicule automobile (2), qui comprend un mécanisme de massage (20) avec un moteur électrique (30) et un dispositif de commande (26, 40), et qui fonctionne selon un procédé (54) selon l'une des revendications 1 à 6.

8. Dispositif de massage à moteur électrique (6) selon la revendication 7,
**caractérisé en ce**
**que** le mécanisme de massage (20) a un ressort (46) qui est mobile dans une direction prédéterminée (48) et chargé par ressort, la position du timbre (46) étant limitée dans la direction prédéterminée (48) à l'aide d'une corde (44), ce qui est en relation fonctionnelle avec le moteur électrique (30).

9. Dispositif de massage à moteur électrique (6) selon la revendication 8,
**caractérisé en ce**
**que** la première valeur de référence (66) correspond à l'expansion du ressort (52).

10. Siège (4) d'un véhicule automobile (2), avec un dispositif de massage à moteur électrique (6), selon l'une des revendications 7 à 9.
